# FASCICULE DE BREVET EUROPEEN

(11) **EP 0 658 374 B1**
(45) Date de publication et mention de la délivrance du brevet: **12.03.1997**
(21) Numéro de dépôt: 94420356.1
(22) Date de dépôt: 13.12.1994
(51) Int. Cl.: B01J 21/18, C04B 35/536, B01J 8/02

(54) **Eléments diffuseurs facilitant le transfert de matière dans des réactions solide-gaz**
Diffusionvorrichtungen zur Erleichterung der Materialübertragung in Feststoff-Gasreaktionen
Diffusing elements facilitating the transfer of material in solid-gas reactions

(30) Priorité: 14.12.1993 FR 9315327
(43) Date de publication de la demande: 21.06.1995
(73) Titulaire: LE CARBONE LORRAINE, F-92400 Courbevoie (FR)
(72) Inventeur: Bauer, Jean-Michel, F-54530 Pagny-sur-Moselle (FR)
(74) Mandataire: Mougeot, Jean-Claude

(56) Documents cités:
- EP-A- 0 495 735
- DE-A- 4 123 262
- GB-A- 2 056 423

## Description

### DOMAINE DE L'INVENTION

L'invention concerne les réactions solide-gaz et plus particulièrement les réactions dans lesquelles ledit solide devant réagir avec ledit gaz est sous une forme agglomérée. Dans ce cas, la mise en oeuvre de ces réactions peut nécessiter des moyens pour faciliter le transfert de matière entre la phase gazeuse et le coeur de la phase solide agglomérée.

### ETAT DE LA TECHNIQUE

L'utilisation de réactions, généralement réversibles, entre un solide (sel, charbon actif, catalyseur, zéolithe...) et un gaz, que ces réactions soient chimiques ou physiques (adsorption, désorption) connaît un développement croissant dans l'industrie.

Les technologies de mise en oeuvre consistent, le plus souvent, à faire réagir le gaz sur le matériau solide , ce dernier étant sous forme de lit de particules solides dans une colonne. Le contact du gaz avec les particules du lit est assuré par la diffusion du gaz dans ce lit de particules non tassées et non agglomérées. Ce contact entre gaz et particules peut encore être amélioré par utilisation d'un lit de particules fluidisé.

Toutefois, certaines applications des réactions solide-gaz nécessitent, pour des raisons propres au procédé ou à sa mise en oeuvre industrielle, que le réactif solide soit aggloméré avec un substrat.

On peut citer en particulier tous les procédés où l'un des objectifs est d'apporter ou d'extraire des calories résultant de la chaleur de réaction entre ledit solide et ledit gaz. Dans ce cas, le solide aggloméré est un matériau composite réactif comprenant deux phases solides : une phase de réactif solide proprement dit destiné à réagir avec ledit gaz, et une phase de substrat destiné à assurer l'échange thermique avec l'extérieur ou une paroi (évacuation ou apport de calories selon que la réaction entre ledit réactif solide et ledit gaz est exothermique ou endothermique).

Comme substrat, on trouve le plus souvent le graphite expansé qui est un matériau bon conducteur de la chaleur et doué de bonnes propriétés de cohésion qui facilitent sa mise en forme. Les propriétés de ce graphite expansé permettent d'obtenir des masses composites mécaniquement solidaires, poreuses, riches en solide réactif et conductrices de la chaleur.
La demande de brevet WO 9115292 décrit la fabrication de tels matériaux composites réactifs à deux phases solides, une phase réactive constituée de sels, et une phase en graphite expansé, l'ensemble étant recomprimé suffisammment pour obtenir un matériau composite réactif ayant une tenue mécanique propre et, en outre, une porosité résiduelle suffisante pour permettre la diffusion du gaz réactif au sein du solide composite et ainsi permettre la réaction entre ledit gaz et ledit solide réactif.

### PROBLEME POSE

Les besoins industriels conduisent à fabriquer des matériaux composites réactifs sous forme de masses de plus en plus importantes, ce qui rend la diffusion du gaz dans la porosité résiduelle du matériau composite réactif de plus en plus lente et difficile.

Pour résoudre ce problème, une des solutions évidentes consiste à réaliser des canaux dans la masse dudit matériau composite réactif, par exemple en perçant des trous parallèles, de telle manière que l'épaisseur de matière entre les canaux ainsi formés soit relativement faible et facilement accessible aux gaz réactifs.
Cependant, cette solution n'est pas satisfaisante car, au cours du temps, il se produit un bouchage progressif des trous. En effet, ledit matériau composite réactif est le siège d'une réaction réversible qui s'accompagne le plus souvent de variations volumiques qui tendent progressivement à altérer la cohésion mécanique du matériau composite réactif et, par là-même, à boucher les trous perforés.

Pour remédier à cela, il a été envisagé de chemiser les trous percés par des tubes poreux.
Pour cela, des tubes métalliques, percés radialement de trous extrèmement fins (par exemple à l'aide d'un rayonnement laser), ont été utilisés. Si de tels tubes constituent une solution techniquement satisfaisante au problème, par contre leur coût élevé rend cette solution non valable sur le plan économique.

Des tubes en céramique ont aussi été essayés, mais abandonnés surtout à cause d'une trop forte augmentation pondérale, des tubes en céramique de faible épaisseur et de faible poids n'étant pas disponibles commercialement.

### DESCRIPTION DE L'INVENTION

Selon l'invention, les éléments diffuseurs, destinés à faciliter le transfert de matière dans les réactions solide-gaz (endo ou exothermiques) entre un gaz réactif et un matériau composite réactif comprenant une phase de solide réactif et une phase de substrat conductrice de la chaleur, à base de graphite expansé, assurant l'échange thermique entre le coeur dudit matériau composite et sa surface extérieure, et implantés dans ledit matériau composite réactif pour faciliter la diffusion dudit gaz réactif dans l'ensemble dudit matériau composite réactif, sont caractérisés en ce que,
a) ces éléments de diffusion sont des profilés en matériau poreux (porosité ouverte) carboné,
b) ces éléments présentent une faible perte de charge, dans la direction dite "de circulation" correspondant à la circulation dudit gaz réactif d'une extrémité à l'autre dudit élément, inférieure à 0,1 MPa par mètre,
c) ces éléments présentent, selon la direction de diffusion, perpendiculaire à ladite direction de circulation, une résistance à l'écrasement, mesurée au moins égale à 1 MPa, et une perméabilité au moins égale à 10⁻⁵ m³/m².s.Pa.

Suite à ses recherches, la demanderesse a réussi à s'écarter des voies utilisées jusqu'à présent et à sélectionner un matériau ainsi qu'un ensemble de critères permettant d'assurer un fonctionnement efficace des éléments diffuseurs.

La demanderesse a en particulier reconnu tout l'intérêt d'utiliser comme diffuseur gazeux un matériau carboné poreux.

Les éléments diffuseurs selon l'invention forment des éléments profilés, sous forme de plaques, de barres, de tubes, présentant dans la direction de diffusion une porosité au moins égale à 20 % et de préférence supérieure à 30 %.
Dans le cas de tubes, la perte de charge par mètre est généralement inférieure à 0,05 MPa/m.

De préférence, la surface externe des éléments diffuseurs présentent un diamètre poreux moyen compris entre 10 et 200 µm, selon la granulométrie du matériau composite réactif et selon la tendance qu'il pourrait avoir à pénétrer dans les pores des éléments diffuseurs, ce qui n'est bien sûr pas souhaitable.

Les moyens définis selon l'invention permettent une diffusion des gaz efficace, sans perte de charge excessive, et sans modification sensible du régime de diffusion au cours du temps.

Comme profilé selon l'invention, on peut prendre des barres en matériau carboné poreux homogène en direction de circulation et en direction de diffusion. Ces barres peuvent être en mousse de carbone à porosité ouverte.

On peut aussi prendre des profilés sous forme de tubes.
Dans ce cas, ces tubes ont une épaisseur inférieure à 2 mm et sont, de préférence de diamètre compris entre 3 et 20 mm.

Parmi les tubes utilisables selon l'invention, ceux en matériau composite carbone-carbone sont préférés lorsque la tenue mécanique est privilégiée.

### EXEMPLES DE REALISATION

### Exemple 1

On a fabriqué des tubes poreux de 10 mm de diamètre et 2 mm d'épaisseur, en composite carbone-carbone selon le procédé décrit dans le brevet français n° 2 582 956 (demande française n° 85-09264), plus spécialement par pultrusion de mélange de fibres de carbone et de résines ou brais, puis par carbonisation.
On obtient ainsi un tube qui convient bien comme élément diffuseur.

### Exemple 2

On a fabriqué des tubes analogues à ceux de l'exemple 1 en utilisant le procédé décrit dans le brevet français n° 2 654 382 (demande française n° 89-15284). Dans ce procédé, on forme le tube en composite carbone-carbone par roulage d'un préimprégné sur un mandrin. Après carbonisation finale, on obtient un tube poreux qui convient bien comme élément diffuseur.

### AVANTAGES DE L'INVENTION

La solution trouvée par la demanderesse permet de résoudre un problème technique tout en apportant de surcroît des avantages qui, dans certains cas, peuvent être décisifs :
- d'une part, l'emploi de profilés en carbone permet l'allégement des équipements qui sont le siège des réactions solide-gaz,
- d'autre part, l'emploi de profilés en carbone peut permettre de résoudre des problèmes de corrosion - problèmes qui ne manqueraient pas d'apparaître avec des tubes métalliques par exemple.
- enfin la technologie de fabrication de tubes en carbone, utilisée dans les exemples, permet un ajustement aisé des caractéristiques mécaniques et de la porosité des tubes en carbone en particulier, de sorte que l'on peut adapter facilement les technologies générales de fabrication des tubes à tout cas particulier sans générer de surcoût de fabrication.

## Revendications

1. Eléments diffuseurs, destinés à faciliter le transfert de matière dans les réactions solide-gaz (endo ou exothermiques) entre un gaz réactif et un matériau composite réactif comprenant une phase de solide réactif et une phase de substrat conductrice de la chaleur, à base de graphite expansé, assurant l'échange thermique entre le coeur dudit matériau composite et sa surface extérieure, et implantés dans ledit matériau composite réactif pour faciliter la diffusion dudit gaz réactif dans l'ensemble dudit matériau composite réactif, sont caractérisés en ce que,
a) ces éléments de diffusion sont des profilés en matériau poreux (porosité ouverte) carboné,
b) ces éléments présentent une faible perte de charge, dans la direction dite "de circulation" correspondant à la circulation dudit gaz réactif d'une extrémité à l'autre dudit élément, inférieure à 0,1 MPa par mètre,
c) ces éléments présentent, selon la direction dite "de diffusion", perpendiculaire à ladite direction de circulation, une résistance à l'écrasement, mesurée au moins égale à 1 MPa, et une perméabilité au moins égale à 10⁻⁵ m³/m².s.Pa.

2. Eléments diffuseurs selon la revendication 1 caractérisés en ce que lesdits éléments forment des éléments profilés, sous forme de plaques, de barres, de tubes, présentant dans la direction dite de diffusion une porosité au moins égale à 20 % et de préférence supérieure à 30 %.

3. Eléments diffuseurs selon la revendication 2 caractérisés en ce que lesdits profilés forment des barres en matériau carboné poreux homogène en direction dite de circulation et en direction dite de diffusion.

4. Eléments diffuseurs selon la revendication 2 caractérisés en ce que lesdits profilés forment des tubes.

5. Eléments diffuseurs selon la revendication 4 caractérisés en ce que lesdits tubes sont d'épaisseur inférieure à 2 mm et de diamètre compris, de préférence, entre 3 et 20 mm.

6. Eléments diffuseurs selon la revendication 5 caractérisés en ce que lesdits tubes sont en matériau composite carbone-carbone.

## Claims

1. Diffuser elements intended to facilitate the mass transfer in solid/gas reactions (endothermic or exothermic) between a reactive gas and a reactive composite material comprising a reactive solid phase and a heat-conducting substrate phase based on expanded graphite which allow the exchange of heat between the core of said composite material and its external surface and are implanted in said reactive composite material to facilitate the diffusion of said reactive gas in the entirety of said reactive composite material are characterised in that
a) these diffusion elements are profiles made of carbonaceous porous material (open porosity),
b) these elements have a small head loss in the so-called "circulation" direction corresponding to the flow of said reactive gas from one end to the other of said element of less than 0.1 MPa per metre
c) in the so-called "diffusion" direction perpendicular to said circulation direction, these elements have a measured resistance to crushing of at least 1 MPa and permeability of at least 10⁻⁵ m³/m².s.Pa.

2. Diffuser elements according to claim 1, characterised in that said elements form profiled elements in the form of plates, bars and tubes having, in the said diffusion direction, porosity of at least 20% and preferably higher than 30%.

3. Diffuser elements according to claim 2, characterised in that said profiles form bars of porous carbonaceous material which is homogeneous in the said circulation direction and in the said diffusion direction.

4. Diffuser elements according to claim 2, characterised in that said profiles form tubes.

5. Diffuser elements according to claim 4, characterised in that said tubes have a thickness of less than 2 mm and a diameter which is preferably between 3 and 20 mm.

6. Diffuser elements according to claim 5, characterised in that said tubes are of a composite carbon/carbon material.

## Patentansprüche

1. Diffusionsvorrichtungen zur Erleichterung der Materialübertragung in (endo- oder exothermen) Feststoff-Gasreaktionen zwischen einem reaktionsfähigen Gas und einem reaktionsfähigen Verbundmaterial, das eine reaktionsfähige Feststoffphase und eine wärmeleitfähige Substratphase aufweist, auf Grundlage von expandiertem Graphit, die den Wärmeaustausch zwischen dem Kern des Verbundmaterials und dessen Außenfläche sicherstellen und in das reaktionsfähige Verbundmaterial eingelassen sind, um die Diffusion des reaktionsfähigen Gases durch die Gesamtheit des reaktionsfähigen Verbundmaterials zu erleichtern, dadurch gekennzeichnet, daß
a) die Diffusionsvorrichtungen Profile aus offenporigem Kohlenstoffmaterial sind,
b) die Diffusionsvorrichtungen einen geringen Druckabfall in der als Durchflußrichtung bezeichneten, dem Durchfluß des reaktionsfähigen Gases von einem Ende der Diffusionsvorrichtung zum anderen entsprechenden Richtung von weniger als 0,1 MPa pro Meter aufweisen,
c) die Diffusionsvorrichtungen in der als Diffusionsrichtung bezeichneten, zur Durchflußrichtung senkrechten Richtung eine gemessene Beständigkeit gegen das Zusammendrücken von wenigstens 1 MPa und eine Permeabilität von wenigstens 10⁻⁵ m³/m²·s·Pa aufweisen.

2. Diffusionsvorrichtungen nach Anspruch 1, dadurch gekennzeichnet, daß sie als Profilelemente in Form von Platten, Stäben oder Rohren ausgebildet sind, die in Diffusionsrichtung eine Porosität von mindestens 20 % und vorzugsweise über 30 % aufweisen.

3. Diffusionsvorrichtungen nach Anspruch 2, dadurch gekennzeichnet, daß die Profile als Stäbe aus in Durchflußrichtung und Diffusionsrichtung homogenem, porösem Kohlenstoffmaterial ausgebildet sind.

4. Diffusionsvorrichtungen nach Anspruch 2, dadurch gekennzeichnet, daß die Profile als Rohre ausgebildet sind.

5. Diffusionsvorrichtungen nach Anspruch 4, dadurch gekennzeichnet, daß die Rohre eine Dicke von unter 2 mm und einen Durchmesser von vorzugsweise zwischen 3 und 20 mm haben.

6. Diffusionsvorrichtungen nach Anspruch 5, dadurch gekennzeichnet, daß die Rohre aus Kohlenstoff-Kohlenstoff-Verbundmaterial sind.
